# FASCICULE DE BREVET EUROPEEN

(11) **EP 0 544 044 B1**
(45) Date de publication et mention de la délivrance du brevet: **03.01.1996**
(21) Numéro de dépôt: 91403212.3
(22) Date de dépôt: 27.11.1991
(51) Int. Cl.: C21C 5/52

(54) **Procédé et dispositif de fusion d'une charge en four**
Verfahren und Vorrichtung zum Schmelzen einer Charge im Ofen
Process and installation for melting a charge in a furnace

(43) Date de publication de la demande: 02.06.1993
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Perrin, Nicolas, F-92100 Boulogne Billancourt (FR); Jouvaud, Dominique, F-75015 Paris (FR)
(74) Mandataire: Le Moenner, Gabriel

(56) Documents cités:
- EP-A- 0 257 450
- EP-A- 0 462 898
- US-A- 3 223 520
- US-A- 3 423 080
- US-A- 4 730 336
- IRON AND STEEL ENGINEER. vol. 61, no. 12, 1284, PITTSBURGH US pages 17 - 19; NORMAN L.KOTRABA: 'oxy-fuel burner experience at georgetown steel corp.'

## Description

La présente invention concerne la fusion d'une charge dans un four, notamment un four électrique de fusion des ferrailles pour la production d'acier, du type avec apport d'énergie de fusion à la charge et post-combustion des fumées par injection, à un niveau horizontal dans l'espace de four au-dessus de la charge, d'au moins un gaz oxygéné sous forme d'au moins un premier jet ayant au moins une composante sensiblement tangentielle suivant un premier sens par rapport à un axe vertical dudit espace.

Un tel procédé est décrit dans le document EP-A-0.257.450, mettant en oeuvre à la fois un brassage du bain et une injection d'un gaz oxygéné par des injecteurs fixes situés sur un niveau dans le haut du four et ayant la même orientation angulaire par rapport à l'axe vertical du four.

L'objet de la présente invention est de proposer un procédé d'injection de gaz oxygénés, simple et de faibles coûts de revient, améliorant notablement, pour la post-combustion, la répartition du gaz oxygéné avec les gaz de combustion, et permettant d'augmenter la durée d'échange entre le gaz oxygéné et les gaz de combustion, notamment CO et H₂, s'échappant de la charge, pour assurer un transfert maximal de l'énergie formée vers la charge métallique.

Pour ce faire, selon une caractéristique de l'invention, le gaz oxygéné est en outre injecté, au même niveau horizontal de l'espace, sous forme d'au moins un second jet, ayant une composante principale sensiblement tangentielle suivant un deuxième sens, opposé au premier sens, par rapport à l'axe vertical de l'espace.

Selon d'autres caractéristiques de l'invention :
- les jets de gaz oxygéné subissent des variations cycliques de débits de gaz oxygéné ;
- les variations cycliques de débits de gaz oxygéné des premier et second jets sont synchronisées entre elles ;
- les variations cycliques de débits de gaz oxygéné des premier et second jets sont déphasées entre elles ;
- les variations de débits des différents jets sont de type pulsé entre un débit minimum et un débit maximum prédéterminés.

Avec un tel procédé, on peut assurer une turbulence prononcée et aisément contrôlable du gaz oxygéné avec les produits gazeux issus de la charge, que l'on peut régler à une valeur optimale correspondant à une réaction de post-combustion la plus complète possible.

L'invention concerne également un dispositif pour la mise en oeuvre d'un tel procédé, du type comprenant un four définissant un espace surplombant la charge et dans lequel débouche, à un niveau horizontal de l'espace, au moins un premier injecteur de gaz oxygéné orienté pour délivrer un jet ayant au moins une composante sensiblement tangentielle suivant un premier sens par rapport à un axe vertical de l'espace, caractérisé en ce qu'il comprend au moins un second injecteur de gaz oxygéné débouchant dans l'espace au même niveau horizontal et orienté pour délivrer un jet ayant une composante principale sensiblement tangentielle suivant un deuxième sens opposé au premier sens par rapport à l'axe vertical de l'espace.

D'autres caractéristiques et avantages de l'invention ressortiront de la description qui suit d'un mode de réalisation, donné à titre illustratif et non limitatif, faite en référence aux dessins annexés sur lesquels :
- la figure 1 est une vue en coupe verticale d'un four électrique selon l'invention ;
- la figure 2 est une vue schématique en plan de ce même four.

Sur les dessins, on a représenté un four électrique 1 comportant une sole 2, une paroi latérale périphérique 3 avec une porte dite de décrassage 4, un bec de coulée du produit de fusion 5, et une voûte 6 formant également support de trois électrodes 7, 8, 9 également réparties autour d'un axe vertical X-Y, de symétrie de l'espace interne du four.

Selon l'invention, le four 1 est équipé d'au moins deux séries d'au moins deux, typiquement au moins trois injecteurs de gaz oxygéné, respectivement 11a, 11b, 11c, et 12a, 12b, 12c, angulairement décalés les uns des autres et débouchant dans l'espace interne du four à un niveau N voisin, dans l'exemple représenté, de la moitié de la hauteur H entre le point le plus bas 2' de la sole 2 et le point le plus haut 6' de la voûte 6.

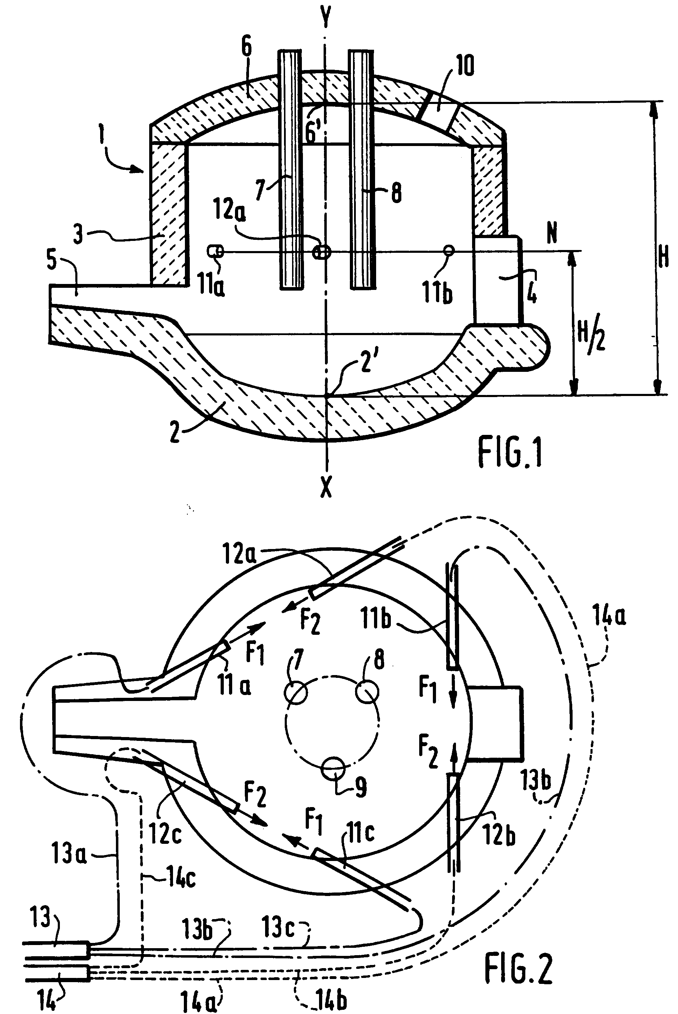

Chaque injecteur 11ᵢ, 12ᵢ est orienté de façon à former au moins un jet présentant une composante tangentielle principale par rapport à l'axe X-Y et éventuellement une composante radiale centripète. Les débouchés 11a, 11b, 11c de la première série inférieure d'injecteurs sont tous orientés, en vue de dessus, dans le sens des aiguilles d'une montre, de façon à promouvoir un courant de gaz à circulation rotative F1 dans le sens des aiguilles d'une montre. Les débouchés des injecteurs 12a, 12b, 12c de la seconde série d'injecteurs sont tous orientés, en vue de dessus, dans le sens opposé au sens des aiguilles d'une montre, de façon à promouvoir un courant de gaz à circulation rotative F₂ dans le sens opposé au sens des aiguilles d'une montre. Au moins certains des injecteurs peuvent être orientés de façon à éjecter un jet ayant une composante vers le bas, c'est-à-dire vers la charge dans le four. Les premiers 11ᵢ et seconds 12ᵢ injecteurs sont avantageusement disposés par paires et en vis-à-vis deux à deux, comme représenté sur la figure 2.

Les premiers injecteurs 11a, 11b, 11c et les seconds injecteurs 12a, 12b, 12c sont respectivement alimentés en oxygène ou gaz suroxygéné par des conduites 13a, 13b, 13c dérivées d'une conduite principale 13, d'une part, et par des conduites 14a, 14b, 14c dérivées d'une autre conduite principale 14, d'autre part, de façon à piloter aisément et indépendamment les variations cycliques de débits, typiquement pulsés, de la première série d'injecteurs 11a, 11b, 11c et de la seconde série d'injecteurs 12a, 12b, 12c.

Typiquement, les premiers injecteurs 11a-11c sont mis en oeuvre simultanément, de préférence avec pulsation des jets, alors que les seconds injecteurs 12a-12c sont inactifs ou ne laissant écouler qu'un faible débit de gaz oxygéné ou d'oxygène, et inversement. La période de cycle peut être variable dans le temps, entre une et dix minutes. Selon un aspect de l'invention, les jets d'une même série d'injecteurs peuvent être également modulés cycliquement en puissance et/ou en durée, avantageusement en synchronisme les uns avec les autres, en pilotant en séquence des vannes de régulation (non représentées) prévues dans les conduits 13a-13c et 14a-14c. Selon les charges à fondre et les dimensions internes du four, on peut prévoir un deuxième groupe de premiers et seconds injecteurs contrarotatifs à un deuxième niveau de l'espace, les premiers injecteurs des deux groupes étant angulairement décalés d'un groupe à l'autre, de même que les deuxièmes injecteurs de ces groupes.

Le procédé et l'installation décrits trouvent leur application non seulement dans un four électrique pour la production d'acier mais également, pour la production de ferro-alliages, dans tout récipient de fusion ou d'affinage pour la production d'alliages métalliques, et plus généralement dans tout récipient contenant une masse liquide à haute température émettant des gaz non totalement brûlés (métallurgie, verrerie, cimenterie).

## Revendications

1. Procédé de fusion d'une charge dans un four (1) avec apport d'énergie de fusion à la charge et post-combustion des fumées par injection, à un niveau horizontal (N) dans l'espace de four au-dessus de la charge, d'au moins un gaz oxygéné sous forme d'au moins un premier jet (F₁) ayant au moins une composante sensiblement tangentielle suivant un premier sens par rapport à un axe vertical (X-Y) dudit espace, caractérise en ce que le gaz oxygéné est en outre injecté, au même niveau horizontal (N) de l'espace, sous forme d'au moins un second jet (F₂) ayant une composante principale sensiblement tangentielle suivant un deuxième sens, opposé au premier sens, par rapport à l'axe vertical (X-Y) de l'espace.

2. Procédé selon la revendication 1, caractérisé en ce qu'il met en oeuvre au moins deux premiers (F₁) et au moins deux seconds (F₂) jets angulairement répartis autour de l'axe vertical (X-Y).

3. Procédé selon la revendication 1 ou la revendication 2, caractérisé en ce que les premier (F₁) et second (F₂) jets ont des variations cycliques de débits de gaz oxygéné.

4. Procédé selon la revendication 3, caractérisé en ce que les variations cycliques de débits des premier (F₁) et seconds (F₂) jets sont synchronisées.

5. Procédé selon la revendication 3, caractérisé en ce que les variations cycliques de débits des premier (F₁) et second (F₂) jets sont déphasées.

6. Procédé selon l'une des revendications 3 à 5, caractérisé en ce que les variations de débits sont de type pulsé entre des débits minimum et maximum prédéterminés.

7. Dispositif de fusion de charge comprenant un four (1) définissant un espace surplombant la charge et dans lequel débouche, à un niveau horizontal (N) de l'espace, au moins un premier injecteur de gaz oxygéné (11a, 11b, 11c) orienté pour délivrer un jet ayant au moins une composante sensiblement tangentielle suivant un premier sens par rapport à un axe vertical (X-Y) de l'espace, caractérisé en ce qu'il comprend au moins un second injecteur de gaz oxygéné (12a, 12b, 12c) débouchant dans l'espace au même niveau horizontal (N) et orienté pour délivrer un jet ayant une composante principale sensiblement tangentielle suivant un deuxième sens opposé au premier sens par rapport à l'axe vertical (X-Y) de l'espace.

8. Dispositif selon la revendication 7, caractérisé en ce qu'il comprend au moins deux premiers (11a-11c) et au moins deux seconds (12a-12c) injecteurs angulairement répartis autour de l'axe vertical (X-Y).

9. Dispositif selon la revendication 8, caractérisé en ce que les premiers (11a-11c) et seconds (12a-12c) injecteurs sont disposés par paire et en vis-à-vis.

10. Dispositif selon la revendication 8 ou la revendication 9, caractérisé en ce que les premiers (11a-11c) et seconds (12a-12c) injecteurs sont alimentés par des conduites de gaz distinctes respectives (14, 13).

## Patentansprüche

1. Verfahren zum Schmelzen einer Charge in einem Ofen (1), bei dem der Charge Schmelzenergie zugeführt und die Rauchgase nachverbrannt werden, indem auf einem horizontal im Ofenraun verlaufenden Niveau (N) zumindest ein sauerstoffhaltiges Gas in Form zumindest eines ersten Strahls (F₁) mit zumindest einer im wesentlichen tangentialen Komponente eingeleitet wird, der bezogen auf eine vertikale Achse (X-Y) des Raums in einer ersten Richtung verläuft, dadurch gekennzeichnet, daß das sauerstoffhaltige Gas darüber hinaus auf demselben horizontal verlaufenden Niveau (N) des Raums in Form zumindest eines zweiten Strahls (F₂) mit einer im wesentlichen tangential verlaufenden Hauptkomponente eingeleitet wird, der bezogen auf die vertikale Achse (X-Y) des Raums in einer zweiten, der ersten Richtung entgegengesetzten Richtung verläuft.

2. Verfahren nach Anspruch 1, dadurch gekennzeichnet, daß mit zumindest zwei ersten (F₁) und zumindest zwei zweiten (F₂) winklig um die vertikale Achse (X-Y) versetzten Strahlen gearbeitet wird.

3. Verfahren nach Anspruch 1 oder 2, dadurch gekennzeichnet, daß die Ausströmmenge des sauerstoffhaltigen Gases in den ersten (F₁) und den zweiten (F₂) Strahlen zyklisch schwankt

4. Verfahren nach Anspruch 3, dadurch gekennzeichnet, daß die zyklischen Schwankungen der Ausströmmengen der ersten (F₁) und zweiten (F₂) Strahlen synchronisiert sind.

5. Verfahren nach Anspruch 3, dadurch gekennzeichnet, daß die zyklischen Schwankungen der Ausströmmengen der ersten (F₁) und zweiten (F₂) Strahlen phasenverschoben sind.

6. Verfahren nach einem der Ansprüche 3 bis 5, dadurch gekennzeichnet, daß die Schwankungen der Ausströmmengen impulsförmig zwischen vorbestimmten minimalen und maximalen Ausströmmengen verlaufen.

7. Vorrichtung zum Schmelzen einer Charge, mit einem Ofen (1), der einen die Charge umgebenden Raum definiert und in den, auf einem horizontal verlaufenden Niveau (N) des Raums, zumindest ein erster Injektor zum Einleiten von sauerstoffhaltigem Gas (11a, 11b, 11c) öffnet, der so ausgerichtet ist, daß er einen Strahl mit zumindest einer im wesentlichen tangentialen Komponente abgibt, der bezogen auf eine vertikale Achse (X-Y) des Raums in einer ersten Richtung verläuft, dadurch gekennzeichnet, daß die Vorrichtung zumindest einen zweiten Injektor zum Einleiten von sauerstoffhaltigem Gas (12a, 12b, 12c) umfaßt, der auf demselben horizontalen Niveau (N) in den Raum öffnet und so ausgerichtet ist, daß er einen Strahl mit einer in wesentlichen tangentialen Hauptkomponente abgibt, der bezogen auf die vertikale Achse (X-Y) des Raums in einer zweiten, der ersten Richtung entgegengesetzten Richtung verläuft.

8. Vorrichtung nach Anspruch 7, gekennzeichnet durch zumindest zwei erste (11a-11c) und zumindest zwei zweite (12-12c) Injektoren, die winklig um die vertikale Achse (X-Y) versetzt angeordnet sind.

9. Vorrichtung nach Anspruch 8, dadurch gekennzeichnet, daß die ersten (11a-11c) und zweiten (12a-12c) Injektoren paarweise und einander gegenüberliegend angeordnet sind.

10. Vorrichtung nach Anspruch 8 oder 9, dadurch gekennzeichnet, daß die ersten (11a-11c) und zweiten (12a-12c) Injektoren über jeweils unterschiedliche Gasleitungen (14, 13) gespeist werden.

## Claims

1. Method for melting a charge in a furnace (1) with the supply of fusion energy to the charge and post-combustion of the fumes by injecting, at a horizontal level (N) in the furnace space above the charge, at least one oxygenated gas in the form of at least one first jet (F₁) having at least one component which is substantially tangential in a first direction with respect to a vertical axis (X-Y) of the said space, characterised in that the oxygenated gas is also injected, at the same horizontal level (N) in the space, in the form of at least one second jet (F₂) having a principal component which is substantially tangential in a second direction, opposite to the first direction, with respect to the vertical axis (X-Y) of the space.

2. Method according to Claim 1, characterised in that it uses at least two first (F₁) and at least two second (F₂) jets angularly spaced around the vertical axis (X-Y).

3. Method according to Claim 1 or Claim 2, characterised in that the first (F₁) and second (F₂) jets have cyclical variations in oxygenated gas flows.

4. Method according to Claim 3, characterised in that the cyclical variations in flow of the first (F₁) and second (F₂) jets are synchronised.

5. Method according to Claim 3, characterised in that the cyclical variations in flow of the first (F₁) and second (F₂) jets are out of phase.

6. Method according to one of Claims 3 to 5, characterised in that the variations in flow are of the type which pulsate between the predetermined minimum and maximum flows.

7. Charge fusion device comprising a furnace (1) defining a space overhanging the charge and into which there opens out, at a horizontal level (N) in the space, at least one first oxygenated gas injector (11a, 11b, 11c) oriented so as to deliver a jet having at least one component which is substantially tangential in a first direction with respect to a vertical axis (X-Y) of the space, characterised in that it comprises at least one second oxygenated gas injector (12a, 12b, 12c) opening out into the space at the same horizontal level (N) and oriented so as to deliver a jet having a principal component which is substantially tangential in a second direction opposite to the first direction with respect to the vertical axis (X-Y) of the space.

8. Device according to Claim 7, characterised in that it comprises at least two first (11a-11c) and at least two second (12a-12c) injectors angularly spaced around the vertical axis (X-Y).

9. Device according to Claim 8, characterised in that the first (11a-11c) and second (12a-12c) injectors are disposed in pairs and facing each other.

10. Device according to Claim 8 or Claim 9, characterised in that the first (11a-11c) and second (12a-12c) injectors are fed by respective separate gas pipes (14, 13).
